# EUROPEAN PATENT SPECIFICATION

(11) **EP 2 818 530 B1**
(45) Date of publication and mention of the grant of the patent: **01.01.2020**
(21) Application number: 14180325.4
(22) Date of filing: 28.01.2005
(51) Int. Cl.: C09K 5/04, F25B 9/00

(54) **Refrigeration cycle utilizing a mixed inert component refrigerant**
Kühlkreislauf mit gemischtem Inertgaskomponentenkältemittel
Cycle de réfrigération utilisant un mélange frigorigène de composant inerte

(30) Priority: 28.01.2004 US 539886 P
(43) Date of publication of application: 31.12.2014
(62) Divisional of application: 05712247.5
(73) Proprietor: Edwards Vacuum, LLC, Sanborn, NY 14132 (US)
(72) Inventor: Flynn, Kevin, P., Novato, CA California 94947 (US); Boiarski, Mikhail, Macungie, PA Pennsylvania 18062 (US); Podtcherniaev, Oleg, 142072 Moscow Region (RU)
(74) Representative: Rawlins, Kate Cecilia

(56) References cited:
- EP-A2- 1 016 839
- US-A- 5 161 382
- US-A- 5 579 654
- US-A- 5 660 047
- US-A- 5 956 958
- US-A- 6 105 388

## Description

### TECHNICAL FIELD

This disclosure, in general, relates to refrigeration cycles and refrigerants used therein.

### BACKGROUND ART

Low temperature and cryogenic refrigeration is typically used to cool fluid streams for cryogenic separations, to liquefy gasses, to provide cooling for biological freezers, control reaction rates of chemical processes, to provide cooling for material property analysis equipment, to trap water vapor to produce low vapor pressures in vacuum processes, to cool articles in manufacturing processes such as semiconductor wafer processing, to cool imaging devices, subatomic particle and photonic detectors, to cool chemical analysis equipment and to cool superconducting cables and devices. Traditional systems use chlorofluorocarbon, hydrochlorofluorocarbon, hydrofluorocarbon, fluorocarbon, and hydrocarbon refrigerants. However, these refrigerants have several disadvantages.

Traditional refrigerants are reactive and may break down into corrosive radicals. Traditional refrigerants, such as chlorofluorocarbons and fluorocarbons, may break down into corrosive chlorine and fluorine radicals. Refrigerants, such as hydrocarbons, may be flammable under process conditions and in the presence of ignition sources. Leaks of these refrigerants in sensitive parts of a process may cause extensive and costly damage. For example, in a semiconductor process, the presence of trace amounts of traditional chlorofluorocarbon and fluorocarbon refrigerants may lead to an increased free radical presence that would impact the production of semiconductor circuitry and related equipment. Larger scale leaks of the traditional refrigerants might lead to fires and other complications.

Traditional refrigerants tend to be regulated. As such, repairs to systems utilizing traditional refrigerants require certified technicians. Repairs of refrigeration systems used in sensitive manufacturing processes cause costly shut downs to allow certified technicians access to the equipment. For example, clean room environments are disadvantaged using traditional refrigerant systems utilizing traditional refrigerants when repairs to the refrigerant system cause costly delays in production.

A further disadvantage may be found in the temperature limitations achievable using traditional refrigerants. Various processes, such as physical vapor deposition processes conducted in a vacuum environment, heat removal during semiconductor manufacturing processes, biological tissue cooling and storage, heat removal from imaging devices and chemical analysis equipment, superconductor cable and device cooling, and chemical and pharmaceutical processes, may be advantaged by using temperatures lower than are achievable by traditional refrigerants. As such, improved low temperature and cryogenic refrigeration processes would be desirable.

US 5,660,047 discloses a refrigeration system that includes a vacuum jacketed pressure vessel which contains both a spray heat exchanger and a shell and tube heat exchanger.

US 5,161,382 discloses a refrigeration system that includes a refrigeration sub-system with outputs furnished to a cryosorption pumping circuit comprised of a closed loop conduit for a second refrigerant.

US 5,579,654 discloses a cryostat refrigeration system using mixed refrigerants in a closed vapor compression cycle.

US 6,105,388 discloses multiple circuit cryogenic liquefaction of industrial gas.

EP 1 016 839 discloses a variable load refrigeration system.

US 5,956,958 discloses a gas mixture for cryogenic applications.

### DISCLOSURE OF INVENTION

In one particular embodiment, the disclosure is directed to a refrigeration system as recited in claim 1.

### BRIEF DESCRIPTION OF THE DRAWINGS

The present disclosure may be better understood, and its numerous objects, features, and advantages made apparent to those skilled in the art by referencing the accompanying drawings.
FIG. 1 includes an illustration of an exemplary embodiment of a cascade refrigeration system.
FIG. 2 includes an illustration of an exemplary embodiment of an autocascade refrigeration cycle.
FIG. 3 includes an illustration of an exemplary embodiment of a refrigeration system.
FIG. 4 includes an illustration of an exemplary embodiment of a refrigeration section.
FIG. 5 includes an illustration of an exemplary embodiment of a refrigeration system.

### MODES FOR CARRYING OUT THE INVENTION

In one particular embodiment, the disclosure is directed to refrigeration and cooling systems having at least one refrigeration cycle, which utilizes a mixed component refrigerant comprising three or more of Ar, N₂, Kr, Ne, Xe, He, O₂, CO₂ and N₂O, which may be characterized as being environmentally friendly refrigerants. In one example, the refrigeration system is a throttle type refrigeration system. The disclosure may also be directed to a mixed component refrigerant comprising non-reactive species and a method for cooling an article or process utilizing a mixed component refrigerant having non-reactive species. The mixed component refrigerant may include a mixture of two or more non-reactive species. The non-reactive species, for example, may include inert gases. In one exemplary embodiment, inert gases may include species selected from the noble gases such as Ar, Kr, Ne, Xe, and He. In another embodiment, the non-reactive components may include diatomic nitrogen (N₂). In a further exemplary embodiment, non-reactive components may include N₂O or CO₂. The mixed component refrigerant may also include O₂. The mixed component refrigerant comprising the non-reactive components is typically free of chlorofluorocarbons, hydrochlorofluorcarbons, fluorocarbons, hydrofluorocarbons, fluoroethers, and hydrocarbons.

As used herein, the term "chlorofluorocarbon" includes dichlorofluoromethane (CCl₂F₂), among other compounds of similar chemical structure. For example, chlorofluorocarbons are molecules formed of chlorine, fluorine, and carbon atoms and have Cl-C and F-C bonds and, depending on the number of carbon atoms in the species, C-C bonds. As used herein the term "fluorocarbon" includes tetrafluoromethane (CF₄), perfluoroethane (C₂F₆), perfluoropropane (C₃F₈), perfluorobutane (C₄F₁₀), perfluoropentane (C₅F₁₂), perfluoroethene (C₂F₄), perfluoropropene (C₃F₆), perfluorobutene (C₄F₈), perfluoropentene (C₅F₁₀), hexafluorocyclopropane (cyclo-C₃F₆) and octafluorocyclobutane (cyclo-C₄F₈), among other compounds of similar chemical structure. Fluorocarbons include molecules formed of fluorine and carbon atoms a have F-C bonds and, depending on the number of carbon atoms in the species, C-C bonds.

As used herein, the term "hydrofluorocarbon" includes fluoroform (CHF₃), pentafluoroethane (C₂HF₅), tetrafluoroethane (C₂H₂F₄), heptafluoropropane (C₃HF₇), hexafluoropropane (C3H2F6), pentafluoropropane (C3H3F5), tetrafluoropropane (C₃H₄F₄), nonafluorobutane (C₄HF₉), octafluorobutane (C₄H₂F₈), undecafluoropentane (C₅HF₁₁), methyl fluoride (CH₃F), difluoromethane (CH₂F₂), ethyl fluoride (C₂H₅F), difluoroethane (C₂H₄F₂), trifluoroethane (C₂H₃F₃), difluoroethene (C₂H₂F₂), trifluoroethene (C₂HF₃), fluoroethene (C₂H₃F), pentafluoropropene (C₃HF₅), tetrafluoropropene (C₃H₂F₄), trifluoropropene (C₃H₃F₃), difluoropropene (C₃H₄F₂), heptafluorobutene (C₄HF₇), hexafluorobutene (C₄H₂F₆) and nonafluoropentene (C₅HF₉), among other compounds of similar chemical structure. Hydrofluorocarbons are molecules including H, F, and C atoms and have H-C and F-C bonds and, depending on the number of carbon atoms in the species, C-C bonds.

As used herein, the term "hydrochlorofluorocarbon" includes chlorodifluoromethane (CHC₁F₂), chlorofluoromethane (CH₂C₁F), chloromethane (CH₃Cl), dichlorofluoromethane (CHC₁₂F), chlorotetrafluoroethane (C₂HC₁F₄), chlorotrifluoroethane (C₂H₂C₁F₃), chlorodifluoroethane (C₂H₃C₁F₂), chlorofluoroethane (C₂H₄C₁F), chloroethane (C₂H5Cl), dichlorotrifluoroethane (C₂HC₁2F₃), dichlorodifluoroethane (C₂H₂C₁₂F₂), dichlorofluoroethane (C₂H₃C₁₂F), dichloroethane (C₂H₄C₁₂), trichlorofluoroethane (C₂H₂C₁₃F), trichlorodifluoroethane (C₂HC₁₃F₂), trichloroethane (C₂H₃C)₃), tetrachlorofluoroethane (C₂HC₁₄F), chloroethene (C₂H₃C₁), dichloroethene (C₂H₂C₁₂), dichlorofluoroethene (C₂H₂C₁F) and dichlorodifluoroethene (C₂HC₁F₂), among other compounds of similar chemical structure. Hydrochlorofluorocarbons are molecules that include H, C₁, F, and C atoms and have H-C, Cl-C, F-C and, depending on the number of carbon atoms in the species, C-C bonds.

As used herein, the term "fluoroether" includes trifluoromethyoxy-perfluoromethane (CF₃-O-CF₃), difluoromethoxy-perfluoromethane (CHF₂--O--CF₃), fluoromethoxy-perfluoromethane (CH₂F-O--CF₃), difluoromethoxy-difluoromethane (CHF₂--O--CHF₂), difluoromethoxy-perfluoroethane (CHF₂--O--C₂F₅), difluoromethoxy-1,2,2,2-tetrafluoroethane (CHF₂--O-C₂HF₄), difluoromethoxy-1,1,2,2-tetrafluoroethane (CHF₂--O--C₂HF₄), perfluoroethoxyfluoromethane (C₂F₅-O--CH₂F), perfluoromethoxy-1,1,2-trifluoroethane (CF₃--O--C₂H₂F₃), perfluoromethoxy-1,2,2-trifluoroethane (CF₃--O-C₂H₂F₃), cyclo-1,1,2,2-tetrafluoropropylether (Cyclo-C₃H₂F₄--O--), cyclo-1,1,3,3-tetrafluoropropylether (cyclo-C₃H₂F₄--O--), perfluoromethoxy-1,1,2,2-tetrafluoroethane (CF₃--O-C₂HF₄), cyclo-1,1,2,3,3-pentafluoropropylether (cyclo-C₃H₅--O--), perfluoromethoxy-perfluoroacetone (CF₃--O--CF₂-O--CF₃), perfluoromethoxy-perfluoroethane (CF₃--O-C₂F₅), perfluoromethoxy-1,2,2,2-tetrafluoroethane (CF₃--O--C₂HF₄), perfluoromethoxy-2,2,2-trifluoroethane (CF₃--O--C₂H₂F₃), cyclo-perfluoromethoxy-perfluoroacetone (cyclo-CF₂--O--CF₂--O-CF₂--) and cyclo-perfluoropropylether (cyclo-C₃F₆--O), methoxy-perfluoropropane (CH₃--O-CF₂CF₂CF₃), among other compounds of similar chemical structure. Exemplary fluoroethers may further include cyclic or acyclic hydrofluoroethers of the formula CaFbH₂ a+d-b OC wherein a = 2 or 3, 3 ≤b ≤8, c = 1 or 2, and d = 0 or 2. Fluoroethers are molecules including F, O, and C atoms and may include H atoms. Fluoroethers have at least two O-C bonds and have F-C, optionally, H-C and, depending on the number of carbon atoms in the species, C-C bonds.

As used herein, the term "hydrocarbon" includes hydrogen (H₂), methane (CH₄), ethane (C₂H₆), ethene (C₂H₄), propane (C₃H₈), propene (C₃H₆), butane (C₄H₁₀), butene (C₄H₈), cyclopropane (C₃H₆) and cyclobutane (C₄H₈), among other compounds of similar chemical structure. Hydrocarbons are molecules including H and C atoms and have H-C and, depending on the number of carbon atoms in the species, C-C bonds.

As used herein the term "noble gases" means one of the following: helium (He), neon (Ne), argon (Ar), krypton (Kr), and xenon (Xe). As used herein the term "inert gases" means one of the following: nitrogen (N2), argon (Ar), krypton (Kr), xenon (Xe), neon (Ne), and helium (He). The term "low reactive gases" includes helium (He), neon (Ne), argon (Ar), krypton (Kr), xenon (Xe), nitrogen (N₂), carbon dioxide (CO₂) and N₂₀. The term "cryogenic gases" will be used herein to denote the group comprising helium (He), neon (Ne), argon (Ar), krypton (Kr), xenon (Xe), nitrogen (N₂), N₂₀, carbon dioxide (CO₂) and oxygen (O₂). The cryogenic gases are generally free of chlorofluorocarbons, hydrochlorofluorcarbons, fluorocarbons, hydrofluorocarbons, fluoroethers, hydrocarbons, and similar carbon-based compounds. In some applications, O₂ may be used in amounts not greater than 20 mol%, such as not greater than 15 mol%, not greater than 10 mol%, or not greater than 5 mol%, or may be essentially absent from the mixed refrigerant due to safety and compatibility issues. High concentrations of oxygen at high pressures can result in combustible or flammable mixture. In some cases, oxygen may react violently with metal. In other applications oxygen containing molecules, such as N₂O, and O₂, may not be used due to safety and compatibility issues. However, in other applications, oxygen may provide a desired thermal performance. Therefore, it is to be understood that use of oxygen must be in keeping with standard engineering practice to ensure safety.

In exemplary embodiments, the cryogenic gases may be mixed to form a mixed component refrigerant. In particular examples, the component cryogenic gases may be selected based on normal boiling point temperature differences. For example, the cryogenic gas components may be selected for close normal boiling points. Alternatively, components may be selected such that the difference in normal boiling point between the highest boiling component and the lowest boiling component is at least about 15 C. For example, the normal boiling point difference may be at least about 20 C, such as at least about 30 C or at least about 50 C.

The mixed component refrigerant may be used in a refrigeration system. Embodiments of the above-described mixed component refrigerants are particularly useful in low temperature refrigeration systems providing refrigeration at temperatures not greater than 283K (10 C). For example, embodiments of the above-described mixed component refrigerants may be useful in very low temperature refrigeration systems providing refrigeration at temperatures not greater than 223 K (-50 C), such as refrigeration temperatures from 100 K to 223 K (-173 C to -50 C). In another example, embodiments of the above-described mixed component refrigerants may be useful in cryogenic refrigeration systems providing refrigeration at temperatures not greater than 90 K (-183 C), such as refrigeration temperatures from 4 K to 90 K (-265 C to -183 C). For the purposes of this disclosure, the term "low temperature" will be used to mean temperatures not greater than 283K, the term "very low temperature" will be used to mean temperatures from 90 K to 223K and the term "cryogenic temperature" will be used to mean temperatures from 4K to 90 K. For purposes of clarity, the term "cryogenic component" or "cryogenic gasses" does not denote a use restricted exclusively to "cryogenic temperatures". These terms are independent. The primary benefit of this application is intended for very low temperature and cryogenic cooling applications. However, it is anticipated that the benefits of this application will provide benefits at low temperature applications and possibly even warmer temperature applications and are included for this reason.

The refrigerant systems may operate to refrigerate at low and very low temperatures. In exemplary embodiments, suction lines leading to the compressor may operate with pressures from 34 to 793 kPa (5 to 115 psia) and the discharge lines leading from the compressor may operate with pressures from 793 to 3450 kPa (115 to 500 psia). In other embodiments, the suction lines leading to the compressor may operate with pressures from 793 to 4830 kPa (115 to 700 psia) and the discharge lines leading from the compressor may operate with pressures from 3450 to 34500 kPa (500 to 5000 psia). Herein, refrigeration cycles having suction lines not greater than 793 kPa (115 psia) are designated as low pressure refrigeration cycles and refrigeration cycles having suction lines greater than 793 kPa (115 psia) are designated as high pressure refrigeration cycles. Exemplary embodiments may have suction pressures not greater than 621 (90 psia), such as not greater than 448 kPa (65 psia). Alternative exemplary embodiment may have suction pressures at least about 1380 kPa (200 psia), such as at least about 2070 kPa (300 psia). A multi-cycle refrigeration system may include low and high pressure cycles.

The mixed component refrigerant includes at least three distinct components selected from a group consisting of argon (Ar), diatomic nitrogen (N₂), krypton (Kr), neon (Ne), xenon (Xe), helium (He), oxygen (O₂), carbon dioxide (CO₂) and N₂O. The refrigerant comprises greater than 5 mol.% of each of the at least three distinct components. For example, the mixed component refrigerant may comprise about 5 mol.% to 90 mol.% of a first component. In another example, the refrigerant may comprise about 10 mol.% to 80 mol.% of the first component or about 30 mol.% to 60 mol.% of the first component. The mixed component refrigerant is typically free of chlorofluorocarbons, hydrochlorofluorcarbons, fluorocarbons, hydrofluorocarbons, and hydrocarbons and may be free of fluoroethers.

In one exemplary embodiment that is not claimed, the mixed component refrigerant may include a component selected from the group comprising O₂, Ar, N₂, Ne, and He and one or more components selected from the group comprising Kr, Xe, CO₂, and N₂O. Typically, carbon dioxide by itself is either a solid or liquid at 1 atmosphere and low temperatures, and is generally unsuitable as a refrigerant at low pressures. However, mixing with xenon results in freezing point depression and thus allows CO₂ to be used as a refrigerant at lower pressures than normally expected. Freezing point depression typically occurs with several combinations of the above cryogenic refrigerants disclosed in this application. For example, several combinations of two or more components selected from a group consisting of CO₂, Ar, Kr, Xe, N₂, O₂ exhibit freezing point depression. In particular, a mixed component refrigerant may include CO₂ and at least one component selected from a group consisting of Ar, Kr, Xe, N₂, and O₂. Those skilled in the art will recognize that the extent of freezing point depression diminishes as the concentration of the component with the warmer freezing point is increased.

In another embodiment that is not claimed, the mixed component refrigerant may comprise at least two distinct components selected from a group consisting of Ar, Kr, Ne, Xe, and He. The mixed component refrigerant may comprise about 5 mol.% to 95 mol.% of a first component. In another example, the mixed component refrigerant may comprise about 10 mol.% to 80 mol.% of the first component or about 30 mol.% to 60 mol.% of the first component. The above composition may be particularly advantageous for good freezing point depression.

In another embodiment that is not claimed, the mixed component refrigerant may comprise at least two distinct components selected from a group consisting of N₂, Kr, Ne, Xe, He, O₂, CO₂ and N₂O. The mixed component refrigerant may comprise about 5 mol.% to 95 mol.% of a first component. In another example, the mixed component refrigerant may comprise about 10 mol.% to 80 mol.% of a first component or about 30 mol.% to 60 mol.% of the first component.

In a further particular embodiment that is not claimed, the mixed component refrigerant may comprise a first and a second component. The mixed component refrigerant may comprise about 40% to 90% of the first component. The first component may be selected from a group consisting of Ar, Kr, Ne, Xe, He, O₂, CO₂ and N₂O. The second component may be selected from a group consisting of Ar, N₂, Kr, Ne, Xe, He, O₂, CO₂ and N₂O. For example, the mixed component refrigerant may comprise about 45 mol.% to 80 mol.% of the first component.

In another particular embodiment that is not claimed, the mixed component refrigerant may include a first component selected from a group consisting of CO₂, N₂O, Xe, and Kr and a second component selected from a group consisting of Ar, Ne, N₂, O₂, and He. Particular exemplary embodiments are free of fluorine and chlorine containing molecules.

The refrigeration system may include one or more refrigeration cycles wherein the mixed component refrigerant is included as the refrigerant in at least one or more of the cycles. In one exemplary embodiment, the refrigeration system may have two cycles. The first cycle may include a refrigerant comprising chlorofluorocarbons, hydrochlorofluorcarbons, fluorocarbons, hydrofluorocarbons, fluoroethers, hydrocarbons, or combinations thereof. This first cycle may be used in a cascade configuration to cool a second refrigeration cycle and may at least partially condense a second refrigerant located in the second refrigeration cycle. The second refrigerant may be a non-reactive refrigerant. The second refrigeration cycle may be used to cool a process or an article.

In this manner, the nonflammable or low-flammability, environmentally friendly refrigerant is used in closer proximity to the process, while the regulated and reactive refrigerant is used away from the process. In one particular embodiment, the non-reactive refrigerant is a mixed component refrigerant. Mixing cryogenic species provides freezing point depression and a useful temperature profile.

In one exemplary embodiment that is not claimed, the disclosure is directed to a cooling system having a first refrigerant cycle and second refrigerant cycle. The first refrigerant cycle has a first refrigerant and a second refrigerant cycle has a second refrigerant. The second refrigerant comprises a mixture of cryogenic components. In the second refrigerant cycle at least a portion of the second refrigerant may be liquefied or condensed. The first cycle and the second refrigerant cycle may be coupled in a cascade arrangement. At least one of the first refrigerant cycle and second refrigerant cycle may be an autocascade cycle. The mixture of cryogenic componentscomprises at least three distinct components selected from a group consisting of Ar, N₂, Kr, Ne, Xe, He, O₂, CO₂ and N₂O. The mixed component refrigerant comprises greater than about 5 mol.% of each of the at least three distinct components. In another embodiment, the mixture may include at least two distinct components selected from a group consisting of Ar, Kr, Ne, Xe, O₂, CO₂ and N₂O. In a further exemplary embodiment, the mixture may comprise at least two distinct components selected from a group consisting of N₂, Kr, Xe, He, O₂, CO₂ and N₂O.

In another exemplary embodiment, the disclosure is directed to a cooling system having a first refrigerant cycle and a second refrigerant cycle. The first refrigerant cycle has a first refrigerant and the second refrigeration cycle has a second refrigerant comprising a non-reactive component. The second refrigerant is free of chlorofluorocarbons, hydrochlorofluorcarbons, fluorocarbons, hydrofluorocarbons, fluoroethers, and hydrocarbons. At least a portion of the second refrigerant is condensed in the second refrigerant cycle. The first refrigerant cycle and the second refrigerant cycle may be coupled in a cascade arrangement. At least one of the first refrigerant cycle and second refrigerant cycle may be an autocascade cycle. The second refrigerant may include a mixture comprising at least three distinct components selected from a group consisting of Ar, N₂, Kr, Ne, Xe, He, O₂, CO₂ and N₂O. The mixture may comprise greater than 5 mol.% of each of the at least three distinct components. In another example, the mixture may comprise at least two distinct components selected from a group consisting of Ar, Kr, Ne, Xe, O₂, CO₂ and N₂O. In another exemplary embodiment, the mixture may comprise at least two distinct components selected from a group consisting of N₂, Kr, Xe, He, O₂, CO₂ and N₂O.

The disclosure is also directed to a method of providing cooling that is not claimed. The method includes condensing a first refrigerant in a first refrigeration cycle, depressurizing the first refrigerant to cool a second refrigerant in a second refrigeration cycle, and cooling an article using the second refrigeration cycle. The second refrigerant comprises a mixture of at least two distinct cryogenic gases. The article may be cooled through evaporation of the second refrigerant. The article may be cooled directly or indirectly. The second refrigerant cycle may, for example, cool a fluid and the fluid may cool the article. In another example, the second refrigerant cycle may cool a heat sink and the heat sink may absorb heat from the article. In alternative embodiments, the article may be a heat sink or a work piece. In one exemplary embodiment, the work piece is a semiconductor wafer. In another exemplary embodiment it is a completed microelectronic chip that is either powered or unpowered. In another exemplary embodiment, the object cooled is a gas stream, a liquid stream or a gas that is being partially or fully condensed. The first refrigerant cycle and second refrigerant cycle may be coupled in a cascade arrangement. At least one of the first refrigerant cycle and the second refrigerant cycle may be an autocascade cycle.

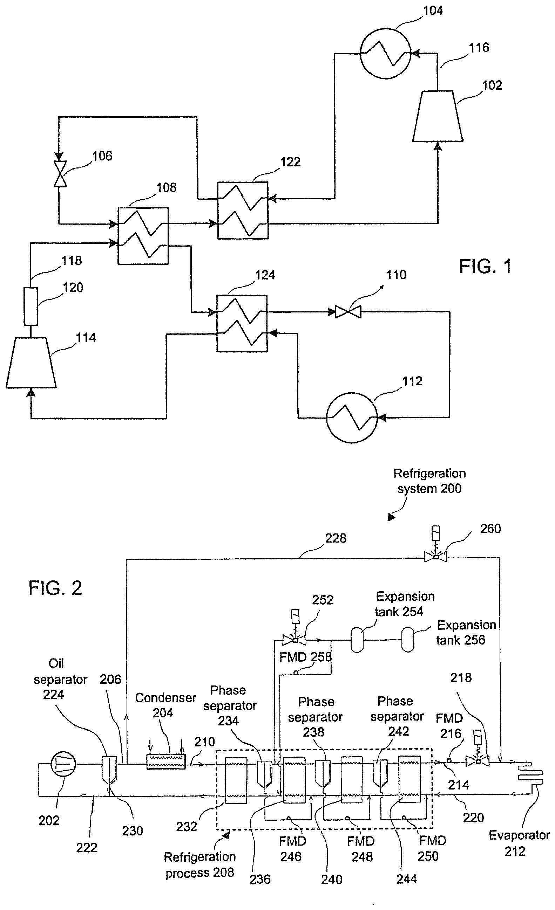

FIG. 1 depicts an exemplary refrigeration system having a first refrigeration cycle 116 and a second refrigeration cycle 118. The first refrigeration cycle 116 and the second refrigeration cycle 118 are arranged in a cascade configuration in which the first refrigeration cycle 116 cools the second refrigeration cycle through heat exchanger or condenser 108.

The refrigerant in the first refrigeration cycle 116 is compressed by compressor 102. The compressed refrigerant is cooled in heat exchanger or condenser 104 to cool and optionally condense the refrigerant. The cooled refrigerant is further cooled by optional heat exchanger 122 and is then depressurized through throttle or expander 106 and heated in heat exchanger 108 to vaporize the refrigerant. Refrigerant exiting heat exchanger 108 is further warmed and vaporized by heat exchanger 122 and is returned to compressor 102. When mixed component refrigerants are used, heat exchanger 122 typically provides improved performance results.

In the second refrigeration cycle 118, a second refrigerant is compressed by compressor 114. The compressed second refrigerant is cooled to room temperature by desuperheater 120 and is further cooled and optionally condensed in heat exchanger 108. By substantially vaporizing the first refrigerant in heat exchanger 108, the second refrigerant is cooled and possibly condensed. The cooled second refrigerant is further cooled and further condensed by heat exchanger 124 and is depressurized in throttle or expander 110 and heated in heat exchanger 112, vaporizing the second refrigerant The throttles or expanders 106 and 110 may be valves, capillary tubes, turbine expanders, orifices or pressure drop plates. The refrigerant exiting heat exchanger 112 is further warmed and vaporized by heat exchanger 124. The vaporized second refrigerant is returned to compressor 114.

Heat exchanger 112 may be used to cool a process or an article. The heat exchanger 112 may, for example, cool a heat transfer medium, a heat sink, or an article. The article may be cooled indirectly by using the heat transfer medium or heat sink. In one exemplary embodiment, the article is a semiconductor wafer. In another exemplary embodiment, heat exchanger 112 may cool a gas stream to, for example, condense water vapor, or to cool or liquefy a gas for use in heat transfer with an external object or for a multitude of purposes. In a further exemplary embodiment, heat exchanger 112 may be used to cool a stream for use in cryogenic separations. In yet another exemplary embodiment heat exchanger 112 is used to cool a cryocoil in a vacuum pumping system. In yet another exemplary embodiment heat exchanger 112 is used to cool a biological storage unit, or is used to trap solvents in a lyophyilizer, or is used to remove heat from a biopharmaceutical process. Alternatively, the heat exchanger 112 may be used to cool superconducting cable and devices. Further, heat exchanger 112 may cool an imaging device or a chemical analysis device.

The first refrigerant may be a low-reactive or cryogenic refrigerant. Alternatively, the first refrigerant may be a refrigerant that includes chlorofluorocarbons, hydrochlorofluorocarbons, fluorocarbons, hydrofluorocarbons, fluoroethers, hydrocarbons, or combinations thereof.

Exemplary embodiments of the first refrigerant may include refrigerants such as those described in US Patent 6,502,410 , US Patent 5,337,572 , and PCT Patent Publication No. WO 02/095308 A2

The second refrigerant is a low-reactive refrigerant comprising components selected from Ar, N₂, Kr, Ne, Xe, He, CO₂, and N₂O. The second refrigerant includes at least three distinct components selected from a group consisting of Ar, N₂, Kr, Ne, Xe, He, CO₂, and N₂O. In another example that is not claimed, the refrigerant may include two or more of Ar, N₂, Kr, Ne, Xe, He, O₂, CO₂, and N₂O. The refrigerant comprises greater than 5 mol.% of each of the at least three distinct components. For example, the second refrigerant may comprise between about 5 mol.% and 90 mol.% of a first component. In another example, the refrigerant may comprise between about 10 mol.% and 80 mol.% of the first component or between about 30 mol.% and 60 mol.% of the first component.

In another exemplary embodiment, the second refrigerant may comprise at least two distinct components selected from a group consisting of Ar, Kr, Ne, Xe, He, O₂, CO₂ and N₂O. The second refrigerant may comprise between about 5 mol.% and 95 mol.% of a first component. In another example, the second refrigerant may comprise between about 10 mol.% and 80 mol.% of the first component or between about 30 mol.% and 60 mol.% of the first component.

In another exemplary embodiment, the second refrigerant may comprise at least two distinct components selected from a group consisting of N₂, Kr, Ne, Xe, He, O₂, CO₂ and N₂O. The second refrigerant may comprise between about 5 mol.% and 95 mol.% of a first component. In another example, the second refrigerant may comprise between about 10 mol.% and 80 mol.% of a first component or between about 30 mol.% and 60 mol.% of the first component.

In a further particular embodiment, the second refrigerant may comprise a first and a second component. The second may comprise between 40% and 90% of the first component. The first component may be selected from a group consisting of Ar, Kr, Ne, Xe, He, O₂, CO₂ and N₂O. The second component may be selected from a group consisting of Ar, N2, Kr, Ne, Xe, He, O₂, CO₂ and N₂O. For example, the second refrigerant may comprise between about 45 mol.% and 80 mol.% of the first component.

Either or both of the first and second refrigeration cycles of FIG. 1 may be autocascade cycles. FIG. 2 depicts an exemplary autocascade cycle with defrost capability in accordance with the invention. A refrigerant is compressed in compressor 202. The compressed refrigerant passes through an optional oil separator 224 to remove lubricant from the compressed refrigerant stream. Oil separated by the oil separator 224 may be returned to the suction line 222 of the compressor 202 via transfer line 230. Use of oil separator 224 is optional depending on the amount of oil ejected into the discharge stream and the tolerance of the refrigeration process for oil. In an alternative arrangement, oil separator 224 is located inline with defrost branch line 228.

The compressed refrigerant is passed from the oil separator 224 through line 206 to condenser 204 where the compressed refrigerant is cooled and may be partially or fully condensed. A cooling medium may be used to condense the compressed refrigerant. In the case of a cascade configuration, a first refrigerant may be used to cool or condense a second refrigerant in condenser 204.

From condenser 204, the condensed refrigerant is transferred through line 210 to the refrigeration process 208. The refrigeration process 208 may include one or more heat exchangers, phase separators, and flow metering devices. A cooled outlet 214 of refrigeration process 208 is directed to the evaporator 212, which cools a process or article by absorbing heat from the process or article. The heated refrigerant is returned to the refrigeration process 208 via line 220. In a cascade arrangement evaporator 212 may be used to cool the refrigerant in the next colder stage.

In this exemplary embodiment, refrigeration process 208 is illustrated as an auto-refrigerating cascade system and includes a heat exchanger 232, a phase separator 234, a heat exchanger 236, a phase separator 238, a heat exchanger 240, a phase separator 242, a heat exchanger 244, a flow metering device (FMD) 246, an FMD 248, and an FMD 250. The heat exchangers provide heat transfer from the high pressure refrigerant to the low pressure refrigerant. The FMDs throttle the high pressure refrigerant to low pressure and create a refrigeration effect as a result of the throttling process.

Refrigeration system 200 can operate in one of three modes, cool, defrost and standby. The described refrigerant mixtures permit operation in each of these three modes. If solenoid valves 260 and 218 are both in the closed position, the system is said to be in standby. No refrigerant flows to the evaporator. Refrigerant flows only within the refrigeration process 208 by means of the internal flow metering devices (i.e., FMD 246, FMD 248, and FMD 250), which cause high pressure refrigerant to be delivered to the low pressure side of the process. This permits continuous operation of the refrigeration process 208. In the case where a single throttle refrigeration process is used, a standby mode of operation is only possible if a means of causing flow to go through a throttle is available during the standby mode to cause the refrigerant to flow from the high pressure side to the low pressure side of the refrigeration process 208. In some arrangements, this can be enabled by a pair of solenoid valves to control the flow of refrigerant to the evaporator or back to the refrigeration process. In other arrangements, an additional throttle and a solenoid valve are used to enable this internal flow in standby. In an alternative arrangement, a heat exchanger, referred to as a subcooler, is included in the refrigeration process. When a subcooler is used, a fraction of high-pressure refrigerant is diverted from the evaporator and it is depressurized it to low pressure to lower the refrigerant temperature. This stream is then used in the low pressure side of the subcooler to precool the entire flow in the high pressure side of the subcooler that feeds both the evaporator and this diverted flow. Thus, when flow to the evaporator is stopped, internal flow and heat transfer continues allowing the high pressure refrigerant to become progressively colder, which in turn results in colder temperatures of the depressurized refrigerant entering the subcooler.

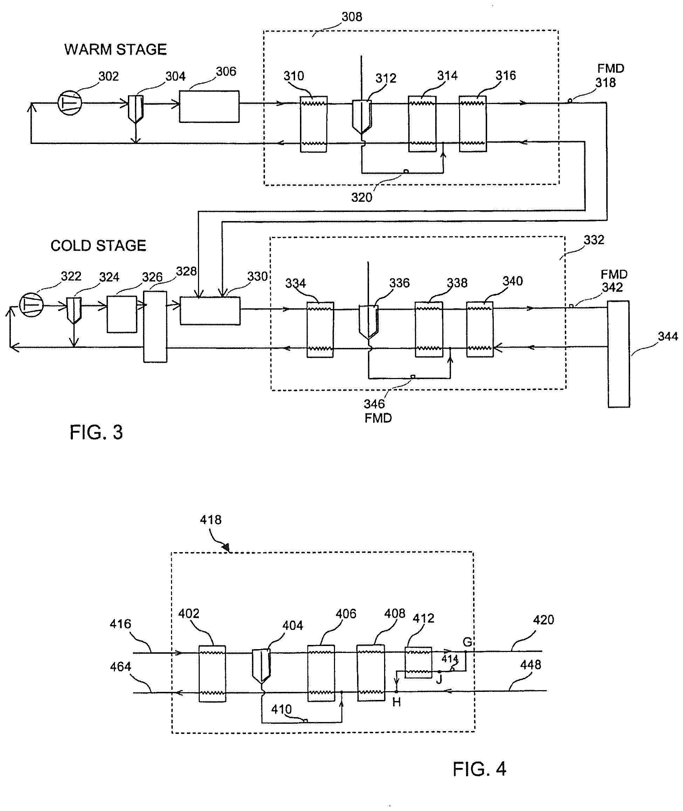

As illustrated in FIG. 4, heat exchanger 412 is known as a subcooler. Some refrigeration processes do not use subcoolers and therefore subcoolers are optional elements. If heat exchanger 412 is not used then the high pressure flow exiting heat exchanger 408 directly feeds refrigerant supply line 420. In the return flow path, refrigerant return line 448 feeds heat exchanger 408. In systems with a subcooler, the low pressure refrigerant exiting the subcooler is mixed with refrigerant return flow at node H and the resulting mixed flow feeds heat exchanger 408. Low pressure refrigerant exiting heat exchanger 408 feeds heat exchanger 406. The liquid fraction removed by the phase separator is brought to low pressure by an FMD 410. Refrigerant flows from FMD 410 and then is blended with the low pressure refrigerant flowing from heat exchanger 408 to heat exchanger 406. This mixed flow feeds heat exchanger 406, which in turn feeds heat exchanger 402, which subsequently feeds compressor suction line 464. The heat exchangers exchange heat between the high pressure refrigerant and the low pressure refrigerant.

Returning to FIG. 2, by opening solenoid valve 218 the system is in the cool mode. In this mode of operation solenoid valve 260 is in the closed position. Refrigerant from the refrigeration process 208 is depressurized by FMD 216 and flows through valves 218 and out to the evaporator 212 and is then returned to refrigeration process 208 via refrigerant return line 220.

Refrigeration system 200 may be placed in the defrost mode by opening solenoid valve 260. In this mode of operation, solenoid valve 218 is in the closed position. In defrost mode hot gas from compressor 202 is supplied to evaporator 212. Typically defrost is initiated to warm the surface of evaporator 212. Hot refrigerant flows through the oil separator 224, to solenoid valve 260 via defrost line 228, is supplied to a node between solenoid valve 218 and evaporator 212 and flows to evaporator 212. In the beginning of defrost, evaporator 212 is at low temperature, very low temperature or cryogenic temperature and causes the hot refrigerant gas to be cooled and fully or partially condensed. The refrigerant returns to the refrigeration process 208 via refrigerant return line 220. The returning defrost refrigerant is initially at low temperature, very low temperature or cryogenic temperature quite similar to the temperatures normally provided in the cool mode. As the defrost process progresses evaporator 212 is warmed. Ultimately the temperature of the returning defrost gas is much warmer than provided in the cool mode. This results in a large thermal load on refrigeration process 208. This can be tolerated for brief periods of time, typically 2 - 7 minutes, which is typically sufficient for warming the entire surface of evaporator 212. A temperature sensor, not illustrated for clarity, may be in thermal contact to refrigerant return line 220. When the desired temperature is reached at refrigerant return line 220 the temperature sensor causes the control system (not illustrated for clarity) to end defrost, closing the solenoid valve 260 and putting refrigeration system 200 into standby. After the completion of defrost, a short period in standby, typically 5 minutes, allows the refrigeration process 208 to lower its temperature before being switched into the cool mode.

The interconnection of all elements of refrigeration system 200 as described above is accomplished to enable refrigerant flow. All elements of refrigeration system 200 are well known in the industry (i.e., compressor 202, condenser 204, refrigeration process 208, evaporator 212, FMD 216, solenoid valve 218, oil separator 224, heat exchanger 232, phase separator 234, heat exchanger 236, phase separator 238, heat exchanger 240, phase separator 242, heat exchanger 244, solenoid valve 252, expansion tank 254, expansion tank 256, and FMD 258.). For clarity however, some brief discussion of the elements is included below.

For the purposes of illustration in this disclosure, refrigeration process 208 of refrigeration system 200 is illustrated in FIG. 2 as one version of an auto-refrigerating cascade cycle. However, refrigeration process 208 of refrigeration system 200 is any low, very low, or cryogenic temperature refrigeration system, using mixed refrigerants.

More specifically, refrigeration process 208 may be the traditional Polycold system (i.e., auto-refrigerating cascade process), CryoTiger® type system (i.e., single stage cryocooler having no phase separation), Missimer type cycle (i.e., auto-refrigerating cascade, Missimer patent 3,768,273), Kleemenko type (i.e., two phase separator system), single phase separator system, or single expansion device type described by Longsworth's Patent 5,441,658. Also refrigeration process 208 may be variations on these processes such as described in Forrest patent 4,597,267 and Missimer patent 4,535,597 , or any mixed component refrigeration process with none, one, or more than one stages of phase separation. A further reference for low temperature, very low temperature and cryogenic refrigeration can be found in Chapters 38 and 39 of the 2002 ASHRAE Refrigeration Handbook produced by the American Society of Heating, Refrigeration, and Air Conditioning Engineering. In addition to the number of phase separators used, the number of heat exchangers, and the number of internal throttle devices used can be increased or decreased in various arrangements as appropriate for the specific application.

Several basic variations of refrigeration process 208 illustrated in FIG. 2 are possible. The refrigeration system 200 illustrated in FIG. 2 associates with a single compressor. However, it is recognized that this same compression effect can be obtained using two compressors in parallel, or that the compression process may be broken up into stages via compressors in series or a two-stage compressor. All of these possible variations are considered to be within the scope of this disclosure. The illustrated embodiment uses a single compressor since this offers improvements in reliability. Use of two compressors in parallel is useful for reducing energy consumption when the refrigeration system is lightly loaded. A disadvantage of this approach is the additional components, controls, floor space, and cost, and reduction in reliability. Use of two compressors in series provides a means to reduce the compression ratio of each stage of compression. This provides the advantage of reducing the maximum discharge temperature reached by the compressed refrigerant gas. However, this too uses additional components, controls and costs and lowers system reliability. The illustrated embodiment uses a single compressor. With a single compressor, the compression of the mixed refrigerants in a single stage of compression may be used without excessive compression ratios or discharge temperatures. Use of a compressor designed to provide multistage compression and which enables cooling of refrigerant between compression stages retains the benefit of separate compression stages while minimizing the disadvantages of increased complexity since a single compressor is still used.

The phase separators may take various forms including coalescent-type, vortex-type, demister-type, or combination of these forms. The phase separators may include coalescent filters, knitted mesh, wire gauze, and structured materials. Depending on the design, flow rate, and liquid content, the phase separator may operate at efficiencies greater than 50%, and may be greater than 85% or in excess of 99%.

The refrigeration system 200 illustrated in FIG. 2 associates with a single evaporator. A common variation is to provide independent control of defrost and cooling control to multiple evaporators. In such an arrangement, the evaporators are in parallel, each having a set of valves, such as 260 and 218, to control the flow of cold refrigerant or hot defrost gas, and the connecting lines. This arrangement makes it possible to have one or more evaporators in the cool, defrost or standby mode, for example, while other evaporators may be independently placed in the cool, defrost or standby mode.

Refrigeration system 200 further includes an optional solenoid valve 252 fed by a branch from first outlet of phase separator 234. An outlet of solenoid valve 252 feeds an optional expansion tank 254 connected in series (illustrated) or in parallel (not illustrated) with a second expansion tank 256. Additionally, an inlet of an optional FMD 258 connects at a node between solenoid valve 252 and expansion tank 254. An outlet of FMD 258 feeds into the refrigerant return path at a node between heat exchanger 236 and heat exchanger 232. Various arrangements of system components may be used. These arrangements included systems with passive expansion tank, systems in which a solenoid valve opens during start-up to store gas in the expansion tank, and bypass valves used to manage system performance during start-up as disclosed in U.S. Patent 4,763,486 and in U.S. Patent No. 6,644,067. Still other arrangements may be used which include no expansion tank and no special start-up arrangements as disclosed by Longsworth in U.S. Patent 5,441,658. For this reason, use of an expansion tank is optional.

At start up it is typical for most of the refrigerants throughout refrigeration system 200 to be in a gas state since the entire system is at room temperature. It is important to manage the refrigerant gas such that the cool down time is reduced. Selectively removing gas from circulation in refrigeration system 200 during startup is beneficial toward this time reduction. Additionally, the rate at which the gasses are bled back into refrigeration system 200 also affects the cool down rate.

The system controller (not illustrated) opens solenoid valve 252 briefly on startup, typically for 10 to 20 seconds. Solenoid valve 252 is, for example, a Sporlan model B6 valve. As a result, during startup, refrigerant gas exits from phase separator 234 and feeds the series combination of expansion tank 254 and expansion tank 256. FMD 258 regulates the flow of refrigerant gas in and out of expansion tanks 254 and 256. Two considerations for setting the flow through FMD 258 is as follows: the flow must be slow enough such that the gas returning to refrigeration system 200 is condensable in the condenser at whatever operating conditions exist at any given time, thereby insuring faster cool down. It is this initial formation of liquid during the start up process that enables cool down times on the order of 15 - 60 minutes. At the same time however, the rate of flow through FMD 258 must be fast enough to insure that enough refrigerant is flowing in refrigeration system 200 such that a possible shutdown due to low suction pressure is prevented. The flow of gas to and from expansion tanks 254 and 256 is controlled passively using FMD 258 as illustrated in FIG. 2 . Alternatively, a controller in combination with sensors can be used to provide active flow control. The arrangement of expansion tanks comprise at least one pressure vessel and could have any number or combination of expansion tanks arranged in series and or parallel.

FIG. 3 depicts a two-stage refrigeration system. The first stage is a warm stage that cools the second stage or cool stage. The second stage in turn cools a process or article through an evaporator or heat exchanger 344.

In the first stage, a compressor 302 compresses a first refrigerant. The compressed refrigerant passes through an optional oil separator 304 in which entrained oil may be removed and returned to the compressor. The compressed refrigerant is transferred to a condenser 306 where the compressed refrigerant condenses to a liquid form. The condensed refrigerant passes into a refrigeration section 308.

This refrigeration section 308 may include one or more heat exchangers and may be one of a simple refrigeration cycle (in some configurations, 308 will not exist) with standard refrigerants, single heat exchanger between high and low pressure streams employing a refrigerant mixture and without phase separation. The refrigeration section 308 may also include at least one heat exchanger, one or more phase separators and flow metering devices (FMDs) or expanders. In the example illustrated, the refrigeration section 308 includes three heat exchangers 310, 314, 316, a phase separator 312, and an FMD 320. The condensed refrigerant passes through heat exchangers 310, 314, 316 through which heat is exchanged from the compressed or condensed refrigerant to the low pressure refrigerant returning to the compressor 302. Phase separator 312 and FMD 320 may be used to create a further refrigeration effect as a result of the pressure drop, and mixing of the different composition with returning flow

FMD 318 may be used on the outlet of the refrigeration section to control refrigerant flow. FMD 318 may be closed, allowing the refrigeration cycle to cycle independently. Alternatively, FMD 318 may be opened allowing condensed refrigerant to lose pressure and then enter into heat exchanger 330. In one exemplary embodiment, the first refrigerant may evaporate in heat exchanger 330, while the second refrigerant condenses.

In the second stage or cool stage, the second refrigerant is compressed in compressor 322. The compressed refrigerant may pass through an optional oil separator 324 to remove entrained oil. The compressed refrigerant may pass through an after cooler 326 to partially cool the compressed refrigerant. In an alternative embodiment, the arrangement of the after cooler 326 and the oil separator may be reversed. The compressed refrigerant may also pass through a heat exchanger 328 to further cool the compressed refrigerant and partially heat the low pressure refrigerant returning to the compressor suction line. The compressed refrigerant may then pass through condenser or heat exchanger 330, where heat is exchanged with the first refrigeration cycle. The condensed refrigerant may pass into a refrigeration section 332 for further cooling. The cooled refrigerant is depressurized through FMD 342 into an evaporator 344 to cool a process or article.

The refrigeration section 332 including heat exchangers 334, 338, 340, phase separator 336, and FMD 346 may operate in a similar manner to refrigeration section 308. Alternatively, various configurations may be used in the refrigeration section 332.

The refrigerant compressor 332 in the cold stage will typically be used with the subject blends comprised of noble gases, low reactive gases, or cryogenic gases disclosed in this application. In one exemplary embodiment compressor 332 is an oilless compressor. In this case, there is no need for an oil separator. In another exemplary embodiment, this compressor 332 is oil lubricated. Depending on the final temperature produced by this cold stage, and by the number and type of phase separators used in the refrigeration process and whether hot gas defrost capability is used, an oil separator, or an oil adsorber or a combination of oil separator and oil adsorber may be effective to limit the presence of oil at the colder parts of this refrigeration stage. Oils that can be used for the compressor are polyol ester (POE, also known as neopentyl esters) type oils, polyalkylene glycols (PAG), and polyvinyl ether (PVE). In addition, other oils may be suitable. The main selection criteria are very low vapor pressure (similar to POE, PAG and PVE oils), and good lubrication of the compressor such that wear of the moving parts is eliminated or minimized. In addition, the oil management system must assure that the oil is able to return the compressor on a reliable basis and it does not accumulate excessively in the heat exchangers or the throttles or expanders.

In addition to variations of the refrigeration process, various arrangements for defrost function are possible. One common variation is the inclusion of a defrost capability. Such defrost capabilities range in complexity depending on the amount of complexity desired. In the simplest arrangement, hot gas from the compressor discharge is bypassed around the refrigeration process and routed to the evaporator as illustrated in FIG. 2. Such a defrost arrangement can be added to the low temperature refrigeration process of FIG. 3. Alternatively, other defrost arrangements of increased complexity can be added to the colder temperature stage of the refrigeration cycle illustrated in FIG. 3. Some examples of alternative defrost arrangements are disclosed in US patent 6,574,978.

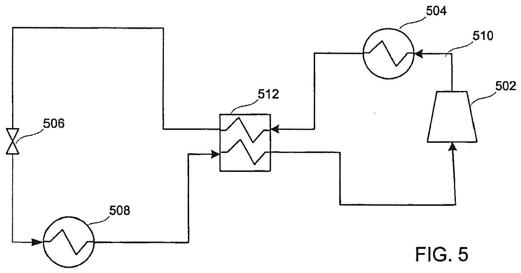

FIG. 5 includes an illustration of another exemplary refrigeration system 500. The refrigeration system 500 illustrates a single refrigeration cycle 510. Mixed refrigerant gas is compressed, such as through compressor 502. Typically, the gas emerges as superheated gas and may include some condensed liquid. The superheated compressed gas is cooled and may be partially condensed in condenser 504. In a cascade arrangement, condenser 504 may reject heat to a warmer refrigeration stage of the refrigeration process. The mixed refrigerant is further cooled by heat exchanger 512 and is expanded or throttled, for example, using throttle valve 506. The mixed refrigerant is heated or evaporated in heater or heat exchanger 508. In a cascade arrangement, heat exchanger 508 may cool the colder stage refrigeration stage of the refrigeration system. During heating and evaporation, the mixed refrigerant draws heat from the system or articles being cooled. The heated mixed refrigerant is further warmed by heat exchanger 512 and is returned to the compressor 502. In this example embodiment, refrigeration process 510 could take the place of either, or both of refrigeration processes 308 and 332 of Figure 3.

In an alternative embodiment, any of the refrigeration processes disclosed can be modified to allow for useful cooling to be done throughout the refrigeration process. As an example, a significant range of temperatures is present throughout heat exchanger 512 in Figure 5. This heat exchanger 512 can add at least a third flow pass to allow for the cooling of a gas stream. Alternatively, the various temperatures present can be used to remove heat from one or more articles. This same utility can be extended to any of the heat exchangers used in the refrigeration processes described in this application.

While the refrigeration system exemplified in FIGs. 1-5 are illustrated as throttle type systems, the refrigeration systems may alternatively include expanders or may alternatively include oscillating type systems. Generally, the cryogenic mixed refrigerants described above illustrate particular and distinct usefulness in throttle type systems. Throttle type refrigeration systems act by allowing refrigerant to expand through a throttling process. A throttling process is characterized by flow through an orifice, valve or restrictive tubing and results in a drop in pressure. In some cases, the throttling process can be coupled with a heat transfer function. However, typically such processes take place with little or no heat transfer. The simplicity of throttle type systems has significant advantages over other methods of pressure reduction since no moving parts are utilized and the flow is non-oscillating.

In contrast expanders allow work to be removed from the fluid during the pressure reduction process and result in a lower temperature relative to a throttle process without heat transfer. Particular cryogenic mixed refrigerant embodiments illustrate usefulness in expander systems. Expanders, like throttle devices can be used in steady flow processes. However, Expanders are disadvantaged by their high cost and limited ability to tolerate significant quantities of liquid refrigerant without damage to the moving elements. However, some designs do exist that offer a degree of liquid phase tolerance. Once such example of an expansion device is a turbo-expander.

Some refrigeration processes do not rely on steady flow and are herein referred to as dynamic flow systems, or oscillating flow systems. For example, Stirling and Gifford McMahon refrigeration systems use a piston to allow the fluid to expand against a resistance and thus allow the fluid to perform work. Such an arrangement is not steady state since it produces an oscillating flow and the flow direction through the accompanying expansion cylinder, and the accompanying regenerator are reversed with each cycle of the piston. Some cryogenic mixed refrigerant embodiments illustrate particular usefulness in piston-based systems.

Pulse tube refrigeration systems also rely on oscillating flow behave yet differently again since there is no moving piston. Instead, the expansion takes place in a fluid volume inside the pulse tube. Particular cryogenic mixed refrigerant embodiments illustrate usefulness in pulse tube systems.

In these embodiments, alternative components, such as a regenerator element may be useful as disclosed in chapter 38 of the 2002 ASHRAE Refrigeration Handbook. Many variations of these systems have been developed. An Ericksson cycle is an example of one such variation.

Due to the different mechanics associated with the fluid flow, those skilled in the art will recognize these mixtures will behave differently in each of the above-mentioned processes for throttling and expanding the refrigerant. These differences are due to the interaction of the liquid and vapor phases within each method. The use of refrigerant mixtures results in multicomponent liquid and gas phases, and typically each phase has a different composition. This makes the management of these two phases difficult. Single refrigerant systems do not have this challenge. Therefore, the proper management of the interaction of the liquid and vapor phases within each method is desirable when using a mixed refrigerant system.

As such, different mixtures may be preferentially used in one type of cycle relative to other cycles. In one particular embodiment, the refrigeration cycle is a steady flow system, such as a refrigeration cycle including throttles and/or expanders. In another exemplary embodiment, the refrigeration cycle is a dynamic flow system, such as a piston system or pulse tube system. In a further example, the refrigeration cycle may be a non-oscillating system, such as a throttle or expander based system. For example, a particular mixture may be useful in a throttle-based system. A second particular mixture may be useful in an expander-based system. In another example, the refrigeration cycle is an oscillating system, such as Stirling and Gifford McMahon piston or pulse tube systems. For example, one mixture may be suitable for use in a piston system and another mixture may be suitable for use in a pulse tube system.

The refrigeration systems exemplified in FIGs. 1-5 may be charged by injecting one or more components or a mixture of components into one or more of the cycles of the refrigeration system. This method may be employed in cascade, autocascade, and single cycle refrigeration systems. The components may be added by metered weight or by measured pressure. Alternatively, the components may be pre-blended to simplify charging in the factory or in the field. Similarly, systems may be services by adding new refrigerant or by replacing refrigerant such that the refrigerant mixture in the refrigeration cycle conforms to the mixtures disclosed above.

In one exemplary embodiment, the first refrigeration cycle may use a first refrigerant such as those described in US Patent 6,502,410 and US Patent 5,337,572. The second refrigeration cycle may use a second refrigerant comprising cryogenic components and free of chlorofluorocarbons, hydrochlorofluorcarbons, fluorocarbons, hydrofluorocarbons, fluoroethers, and hydrocarbons.

### EXAMPLES

In one example, a mixed gas refrigerant comprising CO₂ and Xe cools as low as 167 K at 0.1 MPa or cools as low as 158 K at 0.4 MPa without freeze out. The composition is illustrated in Table 1.

**Table 1**

| Component | Concentration Range (mol%) |
|---|---|
| CO₂ | 5-95 |
| Xe | 5-95 |

In another example, a mixed gas refrigerant comprising N₂O and Xe cools as low as 166 K without freeze out. The composition is illustrated in Table 2.

**Table 2**

| Component | Concentration Range (mol%)N₂O | 5-95 |
|---|---|---|
| Xe | 5-95 | |

In a further example, a mixed gas refrigerant comprising N₂O, CO₂, and Xe cools as low as 166 K without freeze out. The composition is illustrated in Table 3.

**Table 3**

| Component | Concentration Range (mol%) |
|---|---|
| N₂O | 5-90 |
| CO₂ | 5-90 |
| Xe | 5-90 |

In a further example, a mixed gas refrigerant comprising CO₂, Xe, and Kr cools as low as 114 K without freeze out. The composition is illustrated in Table 4.

**Table 4**

| Component | Concentration Range (mol%) |
|---|---|
| CO₂ | 5-60 |
| Xe | 5-80 |
| Kr | 5-80 |

In another example, a mixed gas refrigerant comprising N₂O, Xe, and Kr cools as low as 114 K without freeze out. See Table 5.

**Table 5**

| Component | Concentration Range (mol%) |
|---|---|
| N₂O | 5-60 |
| Xe | 5-80 |
| Kr | 5-80 |

In a further example illustrated in Table 6, a mixed gas refrigerant comprising N₂O, CO₂, Xe, and Kr cools as low as 114 K without freeze out.

**Table 6**

| Component | Concentration Range (mol%) |
|---|---|
| N₂O | 5-40 |
| CO₂ | 5-40 |
| Xe | 5-60 |
| Kr | 5-80 |

In another example illustrated in Table 7, a mixed gas refrigerant comprising Xe and Kr cools as low as 114 K without freeze out.

**Table 7**

| Component | Concentration Range (mol%) |
|---|---|
| Xe | 5-95 |
| Kr | 5-95 |

In a further example illustrated in Table 8, a mixed gas refrigerant comprising Xe, Kr, and Ar cools as low as 82 K without freeze out.

**Table 8**

| Component | Concentration Range (mol%) |
|---|---|
| Xe | 5-60 |
| Kr | 5-80 |
| Ar | 5-90 |

In another example illustrated in Table 9, a mixed gas refrigerant comprising 5 mol% to 95 mol% Kr and 5 mol% to 95 mol% Ar cools as low as 82 K without freeze out.

**Table 9**

| Component | Concentration Range (mol%) |
|---|---|
| Kr | 5-95 |
| Ar | 5-95 |

In a further example illustrated in Table 10, a mixed gas refrigerant comprising 5 mol% to 25 mol% CO2, 5 mol% to 25 mol% N₂O, 5 mol% to 60 mol% Xe, 5 mol% to 75 mol% Kr, and 5 mol% to 75 mol% Ar cools as low as 82 K without freeze out.

**Table 10**

| Component | Concentration Range (mol%) |
|---|---|
| CO₂ | 5-25 |
| N₂O | 5-25 |
| Xe | 5-60 |
| Kr | 5-75 |
| Ar | 5-75 |

In a further example illustrated in Table 11, a mixed gas refrigerant comprising 5 mol% to 60 mol% Xe, 5 mol% to 80 mol% Kr, and 5 mol% to 90 mol% N₂ cools as low as 69 K without freeze out.

**Table 11**

| Component | Concentration Range (mol%) |
|---|---|
| Xe | 5-60 |
| Kr | 5-80 |
| N₂ | 5-90 |

In another example illustrated in Table 12, a mixed gas refrigerant comprising 5 mol% to 25 mol% N₂O, 5 mol% to 25 mol% CO₂, 5 mol% to 60 mol% Xe, 5 mol% to 75 mol% Kr, and 5 mol% to 75 mol% N₂ cools as low as 69 K without freeze out.

**Table 12**

| Component | Concentration Range (mol%) |
|---|---|
| CO₂ | 5-25 |
| N₂O | 5-25 |
| Xe | 5-60 |
| Kr | 5-75 |
| N₂ | 5-75 |

In a further example illustrated in Table 13, a mixed gas refrigerant comprising 5 mol% to 40 mol% Xe, 5 mol% to 40 mol% Kr, 5 mol% to 60 mol% Ar, and 5 mol% to 85 mol% O₂ cools as low as 80 K without freeze out.

**Table 13**

| Component | Concentration Range (mol%) |
|---|---|
| Xe | 5-40 |
| Kr | 5-40 |
| Ar | 5-60 |
| O₂ | 5-85 |

In another example illustrated in Table 14, a mixed gas refrigerant comprising 5 mol% to 95 mol% Xe and 5 mol% to 95 mol% O₂ cools as low as 80 K without freeze out.

**Table 14**

| Component | Concentration Range (mol%) |
|---|---|
| Xe | 5-95 |
| O₂ | 5-95 |

In a further example illustrated in Table 15, a mixed gas refrigerant comprising 5 mol% to 95 mol% Ar and 5 mol% to 95 mol% O₂ cools as low as 79 K without freeze out.

**Table 15**

| Component | Concentration Range (mol%) |
|---|---|
| Ar | 5-95 |
| O₂ | 5-95 |

In another example illustrated in Table 16, a mixed gas refrigerant comprising 5 mol% to 40 mol% Xe, 5 mol% to 40 mol% Kr, 5 mol% to 75 mol% Ar, 5 mol% to 75 mol% O₂, and 5 mol% to 75 mol% N₂ cools as low as 69 K without freeze out.

**Table 16**

| Component | Concentration Range (mol%) |
|---|---|
| Xe | 5-40 |
| Kr | 5-40 |
| Ar | 5-75 |
| O₂ | 5-75 |
| N₂ | 5-75 |

In a further example illustrated in Table 17, a mixed gas refrigerant comprising 5 mol% to 60 mol% Kr, 5 mol% to 85 mol% Ar, and 5 mol% to 90 mol% O₂ cools as low as 78 K without freeze out.

**Table 17**

| Component | Concentration Range (mol%) |
|---|---|
| Kr | 5-60 |
| Ar | 5-85 |
| O₂ | 5-90 |

Additional examples are found in Tables 18 to 42:

**Table 18**

| Component | Concentration Range (mol%) |
|---|---|
| Kr | 5-60 |
| Ar | 5-85 |
| N₂ | 5-85 |

Example: cooling down to 69 K

**Table 19**

| Component | Concentration Range (mol%) |
|---|---|
| Kr | 5-60 |
| Ar | 5-80 |
| N₂ | 5-80 |
| O₂ | 5-85 |

Example: cooling down to 60 K

**Table 20**

| Component | Concentration Range (mol%) |
|---|---|
| Kr | 5-60 |
| Ar | 5-80 |
| N₂ | 5-80 |
| O₂ | 5-80 |

Example: cooling down to 76 K

**Table 21**

| Component | Concentration Range (mol%) |
|---|---|
| Xe | 5-40 |
| Kr | 5-60 |
| Ar | 5-80 |
| Ne | 5-40 |

Example: cooling down to 69 K

**Table 22**

| Component | Concentration Range (mol%) |
|---|---|
| Ar | 5-95 |
| N₂ | 5-95 |

Example - temperatures down to 69 K

**Table 23**

| Component | Concentration Range (mol%) |
|---|---|
| O₂ | 5-95 |
| N₂ | 5-95 |

Example - temperatures down to 69 K

**Table 24**

| Component | Concentration Range (mol%) |
|---|---|
| Xe | 5-40 |
| Kr | 5-60 |
| Ar | 5-60 |
| N₂ | 5-60 |
| Ne | 5-80 |

Example: temperatures down to 27 K

**Table 25**

| Component | Concentration Rage (mol%) |
|---|---|
| Xe | 5-40 |
| Kr | 5-60 |
| Ar | 5-60 |
| N₂ | 5-60 |
| O₂ | 5-60 |
| Ne | 5-60 |

Example: temperatures down to 27 K

**Table 26**

| Component | Concentration Range (mol%) |
|---|---|
| Xe | 5-40 |
| Kr | 5-60 |
| Ar | 5-60 |
| N₂ | 5-60 |
| O₂ | 5-60 |
| He | 5-60 |

Example: temperatures down to 13 K

**Table 27**

| Component | Concentration Range (mol%) |
|---|---|
| Xe | 5-40 |
| Kr | 5-60 |
| Ar | 5-60 |
| N₂ | 5-60 |
| O₂ | 5-60 |
| Ne | 5-25 |
| He | 5-25 |

Example: temperatures down to 10 K

**Table 28**

| Component | Concentration Range (mol%) |
|---|---|
| Kr | 5-80 |
| Ar | 5-60 |
| Ne | 5-60 |

Example: temperatures down to 27 K

**Table 29**

| Component | Concentration Range (mol%) |
|---|---|
| Kr | 5-80 |
| N₂ | 5-60 |
| Ne | 5-60 |

Example: temperatures down to 27 K

**Table 30**

| Component | Concentration Range (mol%) |
|---|---|
| Kr | 5-60 |
| Ar | 5-60 |
| N₂ | 5-60 |
| O₂ | 5-60 |
| Ne | 5-25 |

Example: temperatures down to 40 K

**Table 31**

| Component | Concentration Range (mol%) |
|---|---|
| Kr | 5-60 |
| Ar | 5-60 |
| N₂ | 5-60 |
| O₂ | 5-60 |
| Ne | 5-25 |
| He | 5-25 |

Example: temperatures down to 27 K

**Table 32**

| Component | Concentration Range (mol%) |
|---|---|
| Ar | 5-60 |
| Ne | 5-25 |
| He | 5-25 |

Example: temperatures down to 12 K

**Table 33**

| Component | Concentration Range (mol%) |
|---|---|
| Ar | 5-60 |
| N₂ | 5-60 |
| O₂ | 5-60 |
| Ne | 5-25 |
| He | 5-25 |

Example: temperatures down to 10 K

**Table 34**

| Component | Concentration Range (mol%) |
|---|---|
| N₂ | 5-60 |
| O₂ | 5-60 |
| Ne | 5-25 |
| He | 5-25 |

Example: temperatures down to 10 K

**Table 35**

| Component | Concentration Range (mol%) |
|---|---|
| O₂ | 5-85 |
| Ne | 5-80 |
| He | 5-60 |

Example: temperatures down to 4 K

**Table 36**

| Component | Concentration Range (mol%) |
|---|---|
| Ne | 5-95 |
| He | 5-95 |

Example: temperatures down to 4 K

**Table 37**

| Component | Concentration Range (mol%) |
|---|---|
| N₂ | 5-40 |
| O₂ | 5-40 |
| Ne | 5-60 |
| He | 5-60 |

Example: temperatures down to 4 K

**Table 38**

| Component | Concentration Range (mol%) |
|---|---|
| Ar | 5-40 |
| N₂ | 5-40 |
| O₂ | 5-40 |
| Ne | 5-60 |
| He | 5-60 |

Example: temperatures down to 4 K

**Table 39**

| Component | Concentration Range (mol%) |
|---|---|
| Ar | 5-40 |
| Ne | 5-60 |
| He | 5-60 |

Example: temperatures down to 4 K

**Table 40**

| Component | Concentration Range (mol%) |
|---|---|
| Ar | 5-40 |
| O₂ | 5-40 |
| Ne | 5-60 |
| He | 5-60 |

Example: temperatures down to 4 K

**Table 41**

| Component | Concentration Range (mol%) |
|---|---|
| N₂ | 5-40 |
| Ne | 5-60 |
| He | 5-60 |

Example: temperatures down to 4 K

**Table 42**

| Component | Concentration Range (mol%) |
|---|---|
| N₂ | 5-40 |
| Ar | 5-40 |
| Ne | 5-60 |
| He | 5-60 |

Example: temperatures down to 4 K

## Claims

1. A refrigeration system comprising at least one refrigeration cycle having a mixed component refrigerant free of chlorofluorocarbons, hydrochlorofluorcarbons, fluorocarbons, hydrofluorocarbons, fluoroethers, and hydrocarbons and comprising at least 5 mol% of each of at least three distinct components selected from a group consisting of Ar, N₂, Kr, Ne, Xe, He, O₂, CO₂ and N₂O, wherein the mixed component refrigerant consists essentially of:
A) i) 5 to 80 mol% Kr and either:
(a) ii) 5 to 60 mol% Xe; and iii) 5 to 90 mol% Ar; or
(b) ii) 5 to 60 mol% N₂O; and iii) 5 to 80 mol% Xe; or
(c) ii) 5 to 40 mol% N₂O; iii) 5 to 40 mol% CO₂; and iv) 5 to 60 mol% Xe; or
(d) ii) 5 to 60 mol% Ar; and iii) 5 to 60 mol% Ne;
B) i) 5 to 60 mol% Kr and either:
(a) ii) 5 to 85 mol% Ar; and iii) 5 to 85 mol% N₂; or
(b) ii) 5 to 40 mol% Xe; iii) 5 to 80 mol% Ar; and iv) 5 to 40 mol% Ne; or
C)
i) 5 to 25 mol% CO₂;
ii) 5 to 25 mol% N₂O;
iii) 5 to 60 mol% Xe;
iv) 5 to 75 mol% Kr; and
v) 5 to 75 mol% N₂.

2. The refrigeration system of claim 1, wherein the mixed component refrigerant comprises between about 5 mol% and 90 mol% of a first component of the at least three distinct components.

3. The refrigeration system of claim 1, wherein the mixed component refrigerant comprises between about 10 mol% and 80 mol% of a first component of the at least three distinct components.

4. The refrigeration system of claim 1, wherein the mixed component refrigerant comprises between about 30 mol% and 60 mol% of a first component of the at least three distinct components.

5. The refrigeration system of claim 1, wherein the refrigeration system comprises at least two refrigeration cycles configured in a cascade configuration.

6. The refrigeration system of claim 5, wherein the refrigeration system has two refrigerant cycles, a lower temperature refrigerant cycle of the two refrigerant cycles having the mixed component refrigerant.

7. The refrigeration system of claim 1, wherein the at least one refrigeration cycle comprises a vapor-compression cycle including (i) mechanical compression and (ii) depressurization of the mixed component refrigerant thereby producing a refrigeration effect.

8. The refrigeration system of claim 1, wherein the mixed component refrigerant consists essentially of i) 5 to 80 mol% Kr; ii) 5 to 60 mol% Xe; and iii) 5 to 90 mol% Ar.

9. The refrigeration system of claim 1, wherein the mixed component refrigerant consists essentially of i) 5 to 80 mol% Kr; ii) 5 to 60 mol% N₂O; and iii) 5 to 80 mol% Xe.

10. The refrigeration system of claim 1, wherein the mixed component refrigerant consists essentially of i) 5 to 80 mol% Kr; ii) 5 to 40 mol% N₂O; iii) 5 to 40 mol% CO₂; and iv) 5 to 60 mol% Xe.

11. The refrigeration system of claim 1, wherein the mixed component refrigerant consists essentially of i) 5 to 80 mol% Kr; ii) 5 to 60 mol% Ar; and iii) 5 to 60 mol% Ne.

12. The refrigeration system of claim 1, wherein the mixed component refrigerant consists essentially of i) 5 to 60 mol% Kr; ii) 5 to 85 mol% Ar; and iii) 5 to 85 mol% N₂.

13. The refrigeration system of claim 1, wherein the mixed component refrigerant consists essentially of i) 5 to 60 mol% Kr; ii) 5 to 40 mol% Xe; iii) 5 to 80 mol% Ar; and iv) 5 to 40 mol% Ne.

14. The refrigeration system of claim 1, wherein the mixed component refrigerant consists essentially of i) 5 to 25 mol% CO₂; ii) 5 to 25 mol% N₂O; iii) 5 to 60 mol% Xe; iv) 5 to 75 mol% Kr; and v) 5 to 75 mol% N₂.

## Patentansprüche

1. Kühlsystem mit mindestens einem Kühlkreislauf mit einem Komponentengemisch-Kältemittel, das frei von Chlorfluorkohlenstoffen, Hydrochlorfluorkohlenstoffen, Fluorkohlenstoffen, Hydrofluorkohlenstoffen, Fluoräthem und Kohlenwasserstoffen ist und mindestens 5 mol% von jeder von drei verschiedenen Komponenten aufweist, die aus einer Gruppe ausgewählt sind, die aus Ar, N₂, Kr, Ne, Xe, He, O₂, CO₂, und N₂O besteht, wobei das Komponentengemisch-Kältemittel im wesentlichen besteht aus:
A) i) 5 bis 80 mol% Kr und entweder:
(a) ii) 5 bis 60 mol% Xe; und iii) 5 bis 90 mol% Ar; oder
(b) ii) 5 bis 60 mol% N₂O; und iii) 5 bis 80 mol% Xe; oder
(c) ii) 5 bis 40 mol% N₂O; iii) 5 bis 40 mol% CO₂; und iv) 5 bis 60 mol% Xe; oder
(d) ii) 5 bis 60 mol% Ar; und iii) 5 bis 60 mol% Ne;
B) i) 5 bis 60 mol% Kr und entweder:
(a) ii) 5 bis 85 mol% Ar; und iii) 5 bis 85% N₂; oder
(b) ii 5 bis 40% mol% Xe; iii) 5 bis 80 mol% Ar; und iv) 5 bis 40 mol% Ne; oder
C)
i) 5 bis 25 mol% CO₂;
ii) 5 bis 25 mol% N₂O;
iii) 5 bis 60 mol% Xe;
iv) 5 bis 75 mol% Kr; und
v) 5 bis 75 mol% N₂.

2. Kühlsystem nach Anspruch 1, wobei das Komponentengemisch-Kältemittel zwischen etwa 5 mol% und 90 mol% einer ersten Komponente der mindestens drei verschiedenen Komponenten aufweist.

3. Kühlsystem nach Anspruch 1, wobei das Komponentengemisch-Kältemittel zwischen etwa 10 mol% und 80 mol% einer ersten Komponente der mindestens 3 verschiedenen Komponenten aufweist.

4. Kühlsystem nach Anspruch 1, wobei das Komponentengemisch-Kältemittel zwischen etwa 30 Mol% und 60 Mol% einer ersten Komponente der mindestens drei verschiedenen Komponenten aufweist.

5. Kühlsystem nach Anspruch 1, wobei das Kühlsystem mindestens zwei Kühlkreisläufe aufweist, die in einer Kaskadenkonfiguration konfiguriert sind.

6. Kühlsystem nach Anspruch 5, wobei das Kühlsystem zwei Kältemittelkreisläufe aufweist, wobei ein Kältemittelkreislauf niedrigerer Temperatur von den beiden Kältemittelkreisläufen das Komponentengemisch-Kältemittel enthält.

7. Kühlsystem nach Anspruch 1, wobei der mindestens eine Kühlkreislauf einen Dampfverdichtungszyklus mit i) mechanischer Verdichtung und ii) Entspannung des Komponentengemisch-Kältemittels aufweist, wodurch ein Kühleffekt erzeugt wird.

8. Kühlsystem nach Anspruch 1, wobei das Komponentengemisch-Kältemittel im wesentlichen besteht aus i) 5 bis 80 mol% Kr; ii) 5 bis 60 mol% Xe; und iii) 5 bis 90 mol% Ar.

9. Kühlsystem nach Anspruch 1, wobei das Komponentengemisch-Kältemittel im wesentlichen besteht aus i) 5 bis 80 mol% Kr; ii) 5 bis 60 mol% N₂O, und iii) 5 bis 80 mol% Xe.

10. Kühlsystem nach Anspruch 1, wobei das Komponentengemisch-Kältemittel im wesentlichen besteht aus i) 5 bis 80 mol% Kr; ii) 5 bis 40 mol% N₂O; iii) 5 bis 40 mol% CO₂; und iv) 5 bis 60 mol% Xe.

11. Kühlsystem nach Anspruch 1, wobei das Komponentengemisch-Kältemittel im wesentlichen besteht aus i) 5 bis 80 mol% Kr, ii) 5 bis 60 mol% Ar; und iii) 5 bis 60 mol% Ne.

12. Kühlsystem nach Anspruch 1, wobei das Komponentengemisch-Kältemittel im wesentlichen besteht aus i) 5 bis 60 mol% Kr; ii) 5 bis 85 mol% Ar; und iii) 5 bis 85 mol% N₂.

13. Kühlsystem nach Anspruch 1, wobei das Komponentengemisch-Kältemittel im wesentlichen besteht aus i) 5 bis 60 mol% Kr; ii) 5 bis 40 mol% Xe; iii) 5 bis 80 mol% Ar; und iv) 5 bis 40 mol% Ne.

14. Kühlsystem nach Anspruch 1, wobei das Komponentengemisch-Kältemittel im wesentlichen besteht aus i) 5 bis 25 mol% CO₂; ii) 5 bis 25 mol% N₂O; iii) 5 bis 60 mol% Xe; iv) 5 bis 75 mol% Kr; und v) 5 bis 75 mol% N₂.

## Revendications

1. Système de réfrigération comprenant au moins un cycle de réfrigération ayant un réfrigérant à composants mixtes exempt de chlorofluorocarbures, d'hydrochlorofluorocarbures, de fluorocarbures, d'hydrofluorocarbures, de fluoroéthers, et d'hydrocarbures et comprenant au moins 5 % en mole de chacun d'au moins trois composants distincts choisis dans un groupe constitué d'Ar, N₂, Kr, Ne, Xe, He, O₂, CO₂ et N₂O, dans lequel le fluide frigorigène à composants mixtes est essentiellement constitué de :
A) i) 5 à 80 % en mole de Kr et :
(a) ii) 5 à 60 % en mole de Xe ; et iii) 5 à 90 % en mole d'Ar ; ou
(b) ii) 5 à 60 % en mole de N₂O ; et iii) 5 à 80 % en mole de Xe ; ou
(c) ii) 5 à 40 % en mole de N₂O iii) 5 à 40 % en mole de CO₂; et iv) 5 à 60 % en mole de Xe ; ou
(d) ii) 5 à 60 % en mole d'Ar ; et iii) 5 à 60 % en mole de Ne ;
B) i) 5 à 60 % en mole de Kr et :
(a) ii) 5 à 85 % en mole d'Ar ; et iii) 5 à 85 % en mole de N₂ ; ou
(b) ii) 5 à 40 % en mole de Xe ; iii) 5 à 80 % en mole d'Ar ; et iv) 5 à 40 % en mole de Ne ; ou
C)
i) 5 à 25 % en mole de CO₂ ;
ii) 5 à 25 % en mole de N₂O ;
iii) 5 à 60 % en mole de Xe ;
iv) 5 à 75 % en mole de Kr ; et
v) 5 à 75 % en mole de N₂.

2. Système de réfrigération selon la revendication 1, dans lequel le réfrigérant à composants mixtes comprend entre environ 5 % en mole et 90 % en mole d'un premier composant des au moins trois composants distincts.

3. Système de réfrigération selon la revendication 1, dans lequel le réfrigérant à composants mixtes comprend entre environ 10 % en mole et 80 % en mole d'un premier composant des au moins trois composants distincts.

4. Système de réfrigération selon la revendication 1, dans lequel le réfrigérant à composants mixtes comprend entre environ 30 % en mole et 60 % en mole d'un premier composant des au moins trois composants distincts.

5. Système de réfrigération selon la revendication 1, dans lequel le système de réfrigération comprend au moins deux cycles de réfrigération configurés selon une configuration en cascade.

6. Système de réfrigération selon la revendication 5, dans lequel le système de réfrigération a deux cycles de réfrigérant, un cycle de réfrigérant à température inférieure des deux cycles de réfrigérant ayant le réfrigérant à composants mixtes.

7. Système de réfrigération selon la revendication 1, dans lequel l'au moins un cycle de réfrigération comprend un cycle à compression de vapeur incluant (i) une compression mécanique et (ii) une dépressurisation du réfrigérant à composants mixtes produisant ainsi un effet de réfrigération.

8. Système de réfrigération selon la revendication 1, dans lequel le réfrigérant à composants mixtes est essentiellement constitué de i) 5 à 80 % en mole de Kr ; ii) 5 à 60 % en mole de Xe ; et iii) 5 à 90 % en mole d'Ar.

9. Système de réfrigération selon la revendication 1, dans lequel le réfrigérant à composants mixtes est essentiellement constitué de i) 5 à 80 % en mole de Kr ; ii) 5 à 60 % en mole de N₂O ; et iii) 5 à 80 % en mole de Xe.

10. Système de réfrigération selon la revendication 1, dans lequel le réfrigérant à composants mixtes est essentiellement constitué de i) 5 à 80 % en mole de Kr ; ii) 5 à 40 % en mole de N₂O ; iii) 5 à 40 % en mole de CO₂ ; et iv) 5 à 60 % en mole de Xe.

11. Système de réfrigération selon la revendication 1, dans lequel le réfrigérant à composants mixtes est essentiellement constitué de i) 5 à 80 % en mole de Kr ; ii) 5 à 60 % en mole d'Ar ; et iii) 5 à 60 % en mole de Ne.

12. Système de réfrigération selon la revendication 1, dans lequel le réfrigérant à composants mixtes est essentiellement constitué de i) 5 à 60 % en mole de Kr ; ii) 5 à 85 % en mole d'Ar ; et iii) 5 à 85 % en mole de N₂.

13. Système de réfrigération selon la revendication 1, dans lequel le réfrigérant à composants mixtes est essentiellement constitué de i) 5 à 60 % en mole de Kr ; ii) 5 à 40 % en mole de Xe ; iii) 5 à 80 % en mole d'Ar ; et iv) 5 à 40 % en mole de Ne.

14. Système de réfrigération selon la revendication 1, dans lequel le réfrigérant à composants mixtes est essentiellement constitué de i) 5 à 25 % en mole de CO₂ ; ii) 5 à 25 % en mole de N₂O ; iii) 5 à 60 % en mole de Xe ; iv) 5 à 75 % en mole de Kr ; et v) 5 à 75 % en mole de N₂.
